# EUROPEAN PATENT APPLICATION

(11) **EP 4 190 524 A1**
(43) Date of publication of application: **07.06.2023**
(21) Application number: 21849738.6
(22) Date of filing: 15.07.2021
(51) Int. Cl.: B29B 11/16

(54) **METHODS FOR PRODUCING SHEET MOLDING COMPOUND AND MOLDED ARTICLE**

(30) Priority: 30.07.2020 JP 2020129103
(71) Applicant: DIC Corporation, Tokyo 174-8520 (JP)
(72) Inventor: MURANAKA Yasuyuki, Takaishi-shi, Osaka 592-0001 (JP); HITOMI Kazutoshi, Takaishi-shi, Osaka 592-0001 (JP); NISHIKAWA Daisuke, Takaishi-shi, Osaka 592-0001 (JP)
(74) Representative: TBK
(86) International application number: PCT/JP2021/026545
(87) International publication number: WO 2022/024773

(57) **Abstract**

Provided is a method for producing a sheet molding compound, including a step of measuring bulkiness of a carbon fiber aggregate before an impregnation step of impregnating the carbon fiber aggregate with a resin composition. The method for producing a sheet molding compound can produce a sheet molding compound having the excellent impregnation property into carbon fibers regardless of the content of the carbon fibers, and thus can be preferably used for exteriors, structures, and the like of an automotive member, a railroad vehicle member, an aerospace vehicle member, a ship member, a housing equipment member, a sport member, a light vehicle member, a civil engineering and construction member, an OA equipment, etc.

## Description

### Technical Field

The present invention relates to methods for producing a sheet molding compound and for producing a molded product.

### Background Art

The so-called FRP produced by reinforcing a thermosetting resin with a fiber reinforcing material is used in many fields such as industrial components, housing members, and automotive members. Further, a fiber-reinforced resin composite material produced by reinforcing a thermosetting resin, such as an epoxy resin, an unsaturated polyester resin, or the like, with carbon fibers serving as a fiber reinforcing material attracts attention in terms of the characteristic that it has excellent heat resistance and mechanical strength while being lightweight, and the use for various structural applications is expanded. In addition, a sheet molding compound (may be abbreviated as "SMC" hereinafter) is widely used because it uses discontinuous fibers as a fiber reinforcing material and thus, as compared with continuous fibers, has a wide application range of molded shapes and has productivity and a wide range of design applications due to the ability to reuse end materials and to insert different material members.

For the purpose of improving the appearance and strength of a molded product produced from such SMC, improvement in moldability and impregnation property of the SMC is examined (refer to, for example, Patent Literature 1). However, the method for producing SM has the problem that the resin impregnation property into the carbon fibers is improved, but the fibers are not uniformly dispersed in the width direction and thus uniform dispersibility in the width direction of SMC becomes unsatisfactory when deviation occurs in the degree of dispersion of the carbon fibers.

### Citation List

### Patent Literature

PTL 1: Japanese Unexamined Patent Application Publication No. 2020-2334

### Summary of Invention

### Technical Problem

A problem to be solved by the present invention is to provide a method for producing SMC having excellent impregnation property into carbon fibers regardless of the content of carbon fibers.

### Solution to Problem

The present inventors found that the problem can be solved by a method for producing SMC including a step of measuring bulkiness of a carbon fiber aggregate before an impregnation step of impregnating the carbon fiber aggregate with a resin composition.

That is, the present invention relates to a method for producing SMC including a step of measuring bulkiness of a carbon fiber aggregate before an impregnation step of impregnating the carbon fiber aggregate with a resin composition.

### Advantageous Effects of Invention

SMC and a molded product thereof produced by the present invention have the excellent impregnation property into carbon fibers and thus can be preferably used for exteriors, structures, and the like of an automotive member, a railroad vehicle member, an aerospace vehicle member, a ship member, a housing equipment member, a sport member, a light vehicle member, a civil engineering and construction member, an OA equipment, etc.

### Brief Description of Drawing

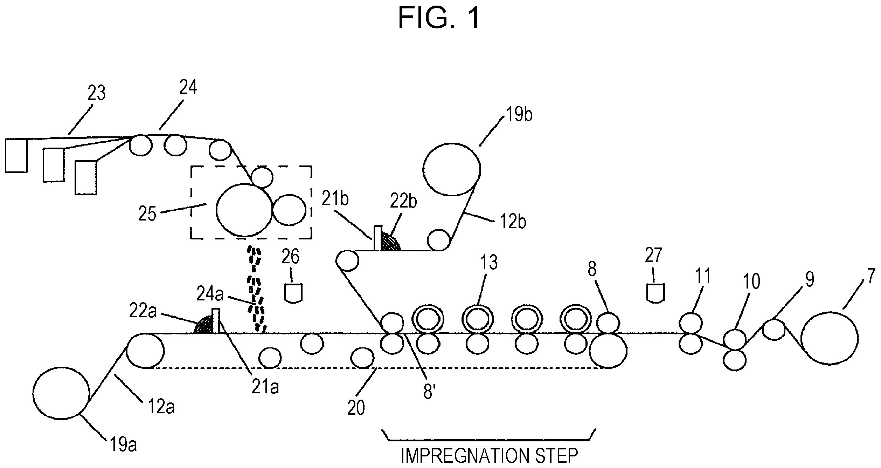

[Fig. 1] Fig. 1 is a schematic drawing showing a step for producing SMC according to an embodiment of the present invention.

### Description of Embodiments

A method for producing SMC of the present invention includes a step of measuring bulkiness of a carbon fiber aggregate before an impregnation step of impregnating the carbon fiber aggregate with a resin composition.

In the present invention, the term "carbon fiber aggregate" represents an aggregate formed of carbon fibers dispersed on a resin composition coated surface before the impregnation step.

A general method for producing SMC is, for example, a method including coating a resin composition on carrier films disposed on upper and lower sides so that the thickness becomes uniform (coating step), spraying a fiber reinforcing material on one of the resin composition-coated surfaces (addition step), inserting the reinforcing material between the resin compositions on the carrier films disposed on upper and lower sides and then passing the whole between impregnation rollers and applying pressure to impregnate the resin composition into the fiber reinforcing material (impregnation step), and then winding into a roll shape or folding zigzag. However, the SMC producing method of the present invention includes the step of measuring bulkiness of the carbon fiber aggregate before the impregnation step, and thus the method can control the uniformity of the amount of carbon fibers in the width direction of SMC, which is difficult to control by measuring the mass of the dispersed carbon fibers. Therefore, pressure in the impregnation step is distributed throughout even in the width direction of SMC, and thus the uniform impregnation property can be secured.

Examples of a method for measuring the bulkiness of the carbon fiber aggregate in the measurement step include a method using a laser displacement meter, a contact-type roller, or heating, and the like, and a method using a laser displacement meter is preferred because the method is noncontact and the apparatus can be miniaturized.

The laser displacement meter is installed on a production line, and before the impregnation step, the bulkiness of the carbon fiber aggregate is measured in the width direction of SMC. When a bulkiness difference (initial bulkiness difference) in the width direction is large, the bulkiness is corrected, whereby SMC having uniform impregnation property in the width direction of SMC and uniform thickness can be efficiently obtained.

Because the impregnation property and thickness uniformity of SMC are more improved, the bulkiness difference after correction (after-correction bulkiness difference) is preferably adjusted to less than 3.5 mm.

The bulkiness can be corrected by, for example, a metal- or plastic-made comb, a rotary roller, or the like.

The steps for producing SMC and the flow of a SMC sheet 8' are described with reference to Fig. 1. A thermoplastic resin film having a thickness of 10 to 50 µm and drawn out by an unwinding device 19a is placed as a lower carrier film 12a on a transfer belt 20, and a resin composition 22a is coated in a predetermined thickness on the lower carrier film by using a resin coating device 21a provided with a doctor blade or the like.

The resin composition 22a is coated so as to be located about 30 to 60 mm inside the width of the lower carrier film for preventing the coating width from projecting from both sides of the lower carrier film 12a. In addition, a guide roll of the transfer belt is properly disposed on the inside of the transfer belt 20.

A thermoplastic resin film such as a generally used polyethylene or polyethylene terephthalate film may be used as a material of the lower carrier film 12a, and a multilayer film including a combination of a nylon film/polypropylene, polyethylene, or the like may also be used. A polypropylene film is preferably used.

The resin composition 22a is a paste-like material prepared by properly mixing a thermosetting resin as a main component, such as an epoxy resin, an unsaturated polyester resin, a vinyl ester resin, or the like, with a filler, a thickener such as a thermoplastic resin powder or the like, a curing catalyst, an internal release agent, a shrinkage-reducing agent, a coloring agent, and the like.

On the other hand, with respect to the caron fibers impregnated with the resin composition 22a, for example, plural bundles of strands 24 are sent from roving 23 into a cutting device 25 and then scattered so as to be uniformly dispersed as carbon fiber cut pieces 24a of about 1/16 to 1.5 inches on the resin composition 22a, producing a carbon fiber aggregate.

The bulkiness of the carbon fiber aggregate is measured by a measuring device 26, and when the initial bulkiness difference H₀ is 3.5 mm or more, the bulkiness is preferably adjusted to less than 3.5 mm by using the comb or the like.

Further, a thermoplastic resin film such as a polyethylene film having a thickness of 10 to 50 µm or the like is drawn out as an upper carrier film 12b by an unwinding device 19b, and the same resin composition 22b as the resin composition 22a is coated in a predetermined thickness on the upper carrier film by a resin coating device 21b provided with a doctor blade or the like, and is disposed on the carbon fiber cut pieces 24a so as to be in contact therewith. Also in this case, the resin composition 22b is coated so as to be located about 30 to 60 mm inside the upper carrier film 12b for preventing the coating width from projecting from both sides of the upper carrier film 12b.

The SMC sheet 8' obtained as described above has the layer configuration of the lower carrier film 12a/the resin composition 22a/the carbon fiber cut pieces 24a/the resin composition 22b/the upper carrier film 12b.

The thickness of a portion excluding both carrier films 12a and 12b is preferably 2.5 to 10 mm, and as shown in Fig. 1, preferably, the whole is sent to an impregnation device 13 in a subsequent step in which it is passed through plural impregnation rollers 13 having various surface groove shapes and defoamed while being impregnated with the resin composition 22a so that the carbon fiber cut pieces 24a are sufficiently wet, and further surface-smoothed, thereby producing the SMC sheet 8' of 10 mm or less.

In the present invention, like the bulkiness of the carbon fiber aggregate, the thickness of the SMC sheet is a value measured by a laser displacement meter.

Examples of the resin in the resin composition include thermosetting resins such as an epoxy resin, a vinyl ester resin, a vinyl urethane resin, an unsaturated polyester resin, a phenol resin, a melamine resin, a furan resin, and the like, and from the viewpoint of the mechanophysical properties sch as strength after molding, an epoxy resin, a vinyl ester resin, and a vinyl urethane resin are more preferred. These resins can be used alone or in combination of two or more.

The resin composition can contain, as components other than the resin, for example, a diluent, a curing agent, a curing accelerator, a polymerization inhibitor, a filler, a low shrinkage agent, thermoplastic resin particles, a release agent, a thickener, a viscosity-reducing agent, a pigment, an antioxidant, a plasticizer, a flame retardant, an antibacterial agent, an ultraviolet stabilizer, a storage stabilizer, a reinforcing material, a photocuring agent, and the like.

Examples of the filler include an inorganic compound and an organic compound, and it can be used for adjusting the physical properties of a molded product, such as strength, elastic modulus, impact strength, fatigue durability, etc.

Examples of the inorganic compound include calcium carbonate, magnesium carbonate, barium sulfate, mica, talc, kaolin, clay, zeolite, asbestos, pearlite, baryta, silica, quartz sand, dolomite limestone, plaster, aluminum fine powder, hollow balloon, alumina, glass powder, aluminum hydroxide, whitish marble, zirconium oxide, antimony trioxide, titanium oxide, molybdenum dioxide, iron powder, and the like.

Examples of the organic compound include natural polysaccharide powders of cellulose, chitin, and the like; synthetic resin powders, and the like, and usable examples of the synthetic resin powders include an organic powder composed of a hard resin, a soft rubber, an elastomer, or a polymer (copolymer), and particles having a multilayer structure such as a core-shell type or the like. Specific examples thereof include particles composed of butadiene rubber and/or acrylic rubber, urethane rubber, silicone rubber, or the like, a polyimide resin powder, a fluorocarbon resin powder, a phenol resin powder, and the like. These fillers can be used alone or in combination of two or more.

Examples of the release agent include zinc stearate, calcium stearate, paraffin wax, polyethylene wax, Carnauba wax, a fluorine-based compound, and the like. A fluorine-based compound and paraffin wax are preferred. These release agents can be used alone or in combination of two or more.

Examples of the thickener include metal oxides and metal hydroxides such as magnesium oxide, magnesium hydroxide, calcium oxide, calcium hydroxide, and the like; acrylic resin-based fine particles; and the like, and it can be properly selected according to the handleability of a fiber-reinforced molding material of the present invention. These thickeners can be used alone or in combination of two or more.

The resin composition can be produced by mixing/dispersing the components described above by using a mixer such as a general mixer, an inter-mixer, a planetary mixer, a roll mill, a kneader, an extruder, or the like.

For example, fibers cut into a length of 2.5 to 50 mm are used as the carbon fibers, but fibers cut into 5 to 40 mm are more preferred because the in-mold fluidity during molding and the appearance and mechanophysical properties of a molded product are more improved.

Usable examples of the carbon fibers include various types such as a polyacrylonitrile type, a pitch type, a rayon type, and the like, and among these, the polyacrylonitrile type is preferred because high-strength carbon fibers can be easily obtained.

In addition, the number of filaments of fiber bundles used as the carbon fibers is preferably 1,000 to 60,000 because the resin impregnation property and the mechanophysical properties of a molded produce are more improved.

The content of the carbon fibers in the components of the SMC of the present invention is preferably within a range of 30% to 65% by mass and more preferably within a range of 35% to 60% by mass because the mechanophysical properties of the resultant molded product are more improved. With an excessively low content of the carbon fibers, a high-strength molded product is not obtained, while with an excessively high content of the fiber reinforcing material, swelling of the molded product possibly occurs due to the insufficient resin impregnation property into the carbon fibers, and thus the high-strength molded product may not be obtained.

In addition, the carbon fibers in the SMC of the present invention are preferably impregnated with the resin in a state where the fibers are in random directions.

A method for producing a molded product of the present invention is a method of molding the SMC produced by the production method described above, and a molding method is preferably heat compression molding from the viewpoint of excellent productivity and excellent design diversity.

A method for producing a molded product, used for the heat compression molding, for example, includes weighing a predetermined amount of the SMC, adding the SMC into a mold previously heated to 110°C to 180°C, clamping the mold by a compression molding machine to shape the molding material, curing the molding material by holing a molding pressure of 0.1 to 30 MPa, and then taking out the resultant molded product. The specific molding conditions are preferably molding conditions in which a molding pressure of 1 to 20 MPa is held in the mold at a mold temperature of 120°C to 160°C for 1 to 5 minutes per mm of the thickness of the molded product, and are more preferably molding conditions in which because the productivity is more improved, a molding pressure of 1 to 20 MPa is held in the mold at a mold temperature of 140°C to 160°C for 1 to 3 minutes per mm of the thickness of the molded product.

The SMC of the present invention has excellent productivity and moldability, etc., and the resultant molded product can be preferably used for casings and the like of an automotive member, a railroad vehicle member, an aerospace vehicle member, a ship member, a housing equipment member, a sport member, a light vehicle member, a civil engineering and construction member, an OA equipment, etc.

### EXAMPLES

The present invention is described in further detail below using examples, but the present invention is not limited to these examples.

### (Synthesis Example 1)

In a 2 L flak provided with a thermometer, a nitrogen inlet tube, and a stirrer, 667 parts by mass of epoxy resin ("Epiclon 850" manufactured by DIC Corporation, bisphenol A-type epoxy resin, epoxy equivalent 188), 96.9 parts by mass of bisphenol A, and 0.38 parts by mass of 2-methylimidazole were charged, heated to 120°C, and reacted for 3 hours, and the epoxy equivalent was measured. After it was confirmed that the epoxy equivalent was 283 as specified, the reaction mixture was cooled to near 60°C, and then 228 parts by mass of methacrylic acid and 0.29 parts by mass of tert-butyl hydroquinone were charged and heated to 90°C under a stream of gas containing a mixture of nitrogen and air at 1:1. In this state, 0.23 parts by mass of 2-methylimidazole was added, heated to 110°C, and reacted for 10 hours. When the acid value was 6 or less, reaction was terminated. The reaction product was cooled to near 60°C and then taken out from the reactor, producing vinyl ester (A-1) having a hydroxyl value of 206 mgKOH/g.

### (EXAMPLE 1)

A resin solution, prepared by dissolving 52.1 parts by mass of the vinyl ester resin (A-1) produced in Synthesis Example 1 in 35.0 parts by mass of phenoxyethyl methacrylate, was mixed with 22.0 parts by mass of polyisocyanate ("Cosmonate LL" manufactured by Mitsui Chemicals & SKC Polyurethanes Inc., aromatic polyisocyanate), 1.2 parts by mass of a polymerization initiator ("Kayacarbon AIC-75" manufactured by Kayaku Akzo Corporation, organic peroxide), and 0.035 parts by mass of a polymerization inhibitor (para-benzoquinone), producing resin composition (A'-1).

### [Formation of SMC]

The resin composition (A'-1) produced as described above was coated on a laminate film of polyethylene and polypropylene so that the average coating amount was 1200 g/m², and carbon fibers (abbreviated as "fiber reinforcing material (E-1)" hereinafter), formed by cutting carbon fiber roving ("T700SC-12000-50C" manufactured by Toray Industries, Inc.) into 12.5 mm, were uniformly dropped from the air by hitting with a dispersion roller so that the thickness was uniform without fiber directivity, and the carbon fiber content was adjusted to 40% by mass. This operation used a device in which the dispersion roller had disks provided at both ends of a shaft, each of the disks had eight round bars of φ5 mm provided at equal intervals along the outer periphery, and the cut fibers were dispersed by the impact on the round rods of the dispersion roller. When the fibers dispersed by the dispersion roller were dropped on the laminate film, the initial bulkiness was measured by a laser displacement meter at a place where the fibers came out of a cutter device. A bulkiness difference in the width direction was calculated, and immediately after that, the bulkiness difference was adjusted by adjusting the height of the comb installed on the line. Immediately after the adjustment of bulkiness difference, the carbon fibers were held between the films coated with the resin composition (A'-1), impregnated with the resin under the conditions shown in Table 1, and then allowed to stand at 40°C for 20 hours, producing SMC. The basis weight of the SMC was 2 kg/m².

### [Evaluation of impregnation property of SMC]

The SMC was divided into two portions at the middle line between a line parallel to the surface and a line parallel to the back as viewed from the cross-sectional direction of the SMC, exposing the inside of the SMC. Next, 30 carbon fiber bundles per 30 cm were randomly taken out from the bundles present in the surface of the exposed inside, and the masses thereof were measured, and an average value was calculated. This was repeated at 5 portions, and the fiber mass after impregnation was measured. The fiber mass after impregnation was compared with the unimpregnated fiber mass to evaluate the impregnation property according to criteria below. The unimpregnated fiber mass was determined by measuring the masses of 1000 carbon fibers cut into 12.5 mm and calculating an average. The mass was measured by using an analytical electronic balance GR-202 (manufactured by A & D Company, Limited, weighing unit: 0.01 mg) .
5: The fiber mass after impregnation is increased by 40% or more as compared with the unimpregnated fiber mass.
4: The fiber mass after impregnation is increased by 20% or more and less than 40% as compared with the unimpregnated fiber mass.
3: The fiber mass after impregnation is increased by 10% or more and less than 20% as compared with the unimpregnated fiber mass.
2: The fiber mass after impregnation is increased by 3% or more and less than 10% as compared with the unimpregnated fiber mass.
1: The fiber mass after impregnation is increased by less than 3% as compared with the unimpregnated fiber mass or the outflow of only the resin from the ends of the SMC sheet is 30 mm or more.

### [Formation of molded product]

The SMC (1) produced as described above was pressure-molded at a charge ratio of 75% to the projected area of a 30 cm-square mold under the molding conditions including a mold temperature of 140°C, a pressure time of 5 minutes, and an applied pressure of 10 MPa, thereby producing a molded product (1) having a sheet thickness of 2 mm.

### [Evaluation of impregnation property of molded product]

A section of the molded product (1) produced as described above was observed with a magnification rate of 50 times by using digital microscope VHX-5000 (manufactured by Keyence Corporation) to evaluate the impregnation property according to criteria below. The observation was performed for sections (a total of two directions with a length of 300 mm) in two directions, any desired direction and a direction perpendicular thereto.
5: The number of unimpregnated portions is 2 or less.
4: The number of unimpregnated portions is 3 to 4 or less.
3: The number of unimpregnated portions is 5.
2: The number of unimpregnated portions is 6 to 10.
1: The number of unimpregnated portions is 11 or more.

### (EXAMPLES 2 to 4 and COMPARATIVE EXAMPLES 1 and 2)

SMC (2) to (4) and molded products (2) to (4) were produced by the same method as in Example 1 excepting the number of rotations of the dispersion roller (change in yarn passage), and each of the evaluation was performed.

### (COMPARATIVE EXAMPLE 1)

SMC (R1) and molded product (R1) were produced by the same method as in Example 1 except that the bulkiness of the carbon fiber aggregate was not measured, and the bulkiness difference was not corrected, and each of the evaluation was performed.

### (COMPARATIVE EXAMPLE 2)

SMC (R2) and molded product (R2) were produced by the same method as in Example 2 except that the bulkiness of the carbon fiber aggregate was not measured, and the bulkiness difference was not corrected, and each of the evaluation was performed.

**[Table 1]**

| Table 1 | Example 1 | Example 2 | Example 3 | Example 4 | Comparative Example 1 | Comparative Example 2 |
|---|---|---|---|---|---|---|
| Initial bulkiness difference of carbon fiber aggregate H₀ (mm) | 4 | 8 | 16 | 21 | Not measured | Not measured |
| After-correction bulkiness difference of carbon fiber aggregate H₁ (mm) | 2.5 | 2.5 | 2.5 | 3 | Not corrected | Not corrected |
| Thickness of SMC (mm) | 2 | 2 | 2 | 2 | 5 | 6 |
| Impregnation property in width direction of SMC | 3 | 5 | 5 | 4 | 1 | 1 |
| Impregnation property of molded product | 5 | 5 | 5 | 5 | 2 | 2 |

It was confirmed that the SMC produced by the production method of the present invention in Examples 1 to 4 are excellent in the impregnation property in the width direction and the molded products are excellent in the impregnation property.

On the other hand, Comparative Examples 1 and 2 are examples of SMC produced without passing through the step of measuring the bulkiness of the carbon fiber aggregate, and the impregnation property was confirmed to be unsatisfactory.

### Reference Signs List

- 7: SMC sheet roll
- 8, 9, 10, 11: planar roll
- 8': SMC sheet
- 12: carrier film
- 13: impregnation roller
- 19: unwinding device
- 20: transfer belt
- 21: resin coating device
- 22: resin paste
- 23: roving
- 24: strand
- 25: cutting device
- 26: measuring device

## Claims

1. A method for producing a sheet molding compound, comprising a step of measuring bulkiness of a carbon fiber aggregate before an impregnation step of impregnating the carbon fiber aggregate with a resin composition.

2. The method for producing a sheet molding compound according to Claim 1, wherein the bulkiness of the carbon fiber aggregate is measured by a laser displacement meter.

3. The method for producing a sheet molding compound according to Claim 1 or 2, wherein the content of carbon fibers is 30% to 65% by mass or more.

4. A method for producing a molded product comprising molding a sheet molding compound produced by the method according to any one of Claims 1 to 3.
